# EUROPÄISCHE PATENTSCHRIFT

(11) **EP 2 580 027 B1**
(45) Veröffentlichungstag und Bekanntmachung des Hinweises auf die Patenterteilung: **09.04.2014**
(21) Anmeldenummer: 11741080.3
(22) Anmeldetag: 08.06.2011
(51) Int. Cl.: B25J 9/16, G05B 19/423

(54) **VERFAHREN ZUM PROGRAMMIEREN ODER VORGEBEN VON BEWEGUNGEN ODER ABLÄUFEN EINES INDUSTRIEROBOTERS**
METHOD FOR PROGRAMMING OR SETTING MOVEMENTS OR SEQUENCES OF AN INDUSTRIAL ROBOT
PROCÉDÉ POUR PROGRAMMER OU PRÉDÉFINIR DES DÉPLACEMENTS OU DES SÉQUENCES D'UN ROBOT INDUSTRIEL

(30) Priorität: 08.06.2010 AT 9372010
(43) Veröffentlichungstag der Anmeldung: 17.04.2013
(73) Patentinhaber: KEBA AG, 4041 Linz (AT)
(72) Erfinder: MITTERMAYER, Christoph, A-3400 Weidling/Klosterneuburg (AT)
(74) Vertreter: Burger, Hannes
(86) Internationale Anmeldenummer: PCT/AT2011/000255
(87) Internationale Veröffentlichungsnummer: WO 2011/153569

(56) Entgegenhaltungen:
- EP-A1- 1 588 806
- EP-A1- 1 724 072
- EP-A2- 1 435 280
- WO-A1-2010/049101
- JP-A- 3 238 297
- JP-A- 6 063 882
- JP-A- 7 241 789
- LEE S ET AL: "Teleoperator control system design with human in control loop and telemonitoring force feedback", PROCEEDINGS OF THE CONFERENCE ON DECISION AND CONTROL. TUCSON, DEC. 16 19921216; 19921216 - 19921218 NEW YORK, IEEE, US, Bd. CONF. 31, 16. Dezember 1992 (1992-12-16), Seiten 2674-2679, XP010107845, ISBN: 978-0-7803-0872-5

## Beschreibung

Die Erfindung betrifft ein Verfahren zum Programmieren oder Vorgeben von Bewegungen oder Abläufen eines Industrieroboters oder einer sonstigen mehrachsig steuerbaren Handhabungsvorrichtung, wie dies im Anspruch 1 angegeben ist.

Aus dem Stand der Technik sind Führungs- bzw. Leitsysteme für Industrieroboter oder vergleichbare, mehrachsig steuerbare Handhabungsvorrichtungen bekannt, deren Prinzip darauf beruht, eine Bewegung, die eine Bedienperson mit einem händisch zu führenden Bewegungsvorgabemittel ausführt, direkt auf den Industrieroboter zu übertragen. Die freie Bewegung des händisch zu führenden Bewegungsvorgabemittels wird dabei mit integrierten und/oder externen Sensoren erfasst, daraus die Bewegung des Bewegungsvorgabemittels und in weiterer Folge die korrespondierende Bewegung des Industrieroboters errechnet. Die Bewegung des Industrieroboters kann dabei auf eine Translation oder Rotation von Handlingachsen bzw. Armen des Industrieroboters eingeschränkt sein. Ebenso ist es möglich, die Freiheitsgrade des Industrieroboters bedarfsweise einzuschränken bzw. zu selektieren oder ausschließlich translatorische oder rotatorische Bewegungen bzw. eine Kombination davon zuzulassen. Ebenso ist es bekannt, konstante oder veränderliche, translatorische oder rotatorische Skalierungsfaktoren für die Transformation der Bewegung des händisch zu führenden Bewegungsvorgabemittels gegenüber den Bewegungen des Industrieroboters vorzusehen. Dadurch können beispielsweise größere Bewegungsräume des Industrieroboters durch einen angemessenen Bewegungsraum des Bewegungsvorgabemittels bequem abgedeckt werden. Andererseits können durch diese Skalierungsfaktoren in Verbindung mit der Transformation von Bewegungen auch entsprechend weitreichende und somit für die Bedienperson gut wahrnehm- und ausführbare Bewegungen mit dem händisch zu führenden Bewegungsvorgabemittel vorgenommen werden, sodass auch relativ feine Einstellungen bzw. Bewegungen des Industrieroboters exakt bzw. feinfühlig ausgeführt werden können. Es können also Skalierungen zwischen der Bewegungsvorgabe durch die Bedienperson und der Bewegungsumsetzung durch den Industrieroboter in vergrößernder und verkleinernder Richtung zweckmäßig sein.

Aus dem Stand der Technik sind weiters Teaching-Systeme für Industrieroboter mittels Handprogrammiergeräten (siehe z.B. JP 7 241789 A) bekannt.

Aus dem Stand der Technik ist es weiters bekannt, dass es besonders zweckmäßig ist, wenn die Bewegung des Industrieroboters bzw. dessen Greifers oder Werkzeugs unmittelbar, das heißt direkt und unverzögert der Bewegung des Bewegungsvorgabemittels folgt, ohne dass sich die Bedienperson über die verschiedenen Koordinatensysteme und über die Transformation der Bedienhandlungen auf die gewünschte Bewegung des Industrieroboters Gedanken machen muss. Eine solche direkt gekoppelte Übertragung der Bewegung des Bewegungsvorgabemittels auf den Industrieroboter ermöglicht eine sehr intuitive Führung des Industrieroboters und ist diese Maßnahme daher vor allem für wenig geübte Benutzer, die nur relativ selten einen Industrieroboter bedienen, von besonderem Vorteil. Eine solche Bedienung des Industrieroboters ähnelt dabei in gewissem Ausmaß einer Cursorsteuerung mit einer Computermaus, jedoch ist die Bewegungssteuerung für einen Industrieroboter um einige zusätzliche Freiheitsgrade zu erweitern. Eine wichtige Rolle bei diesen Bedienhandlungen bzw. Bewegungsvorgaben stellt dabei das visuelle Feedback über die Bewegung des Industrieroboters für die Bedienperson dar. Insbesondere wird durch dieses visuelle Feedback an die Bedienperson eine umgehende Korrektur der Bewegung oder Position des Bewegungsvorgabemittels seitens der Bedienperson ermöglicht bzw. vorgenommen, um schließlich den Industrieroboter bzw. dessen Werkzeug oder Greifer in der gewünschten Weise zu positionieren. Hierfür ist vor allem der intuitive und klare Zusammenhang zwischen der gewünschten Bewegung des Industrieroboters und der dafür notwendigen Bewegung des Bewegungsvorgabemittels wesentlich. Die Bedienperson stellt somit automatisch eine Art "menschlicher Regler" dar, welcher Abweichungen zwischen der gewünschten Position bzw. der Soll-Position und der Ist-Position durch entsprechendes Führen des Bewegungsvorgabemittels mehr oder weniger stark ausregelt bzw. mehr oder weniger kompensiert. Dies ist nur in Verbindung mit einer möglichst zeitgleichen bzw. synchronen Ausführung von Bewegungsvorgaben durch die Bedienperson sowie einer korrespondierenden Umsetzung durch den Industrieroboter möglich.

Dem Wunsch einer möglichst unmittelbaren und direkten Übertragung der Bewegung eines händisch zu führenden Bewegungsvorgabemittels auf eine entsprechende Bewegung des Industrieroboters sind jedoch diverse technische oder sicherheitsbedingte Grenzen gesetzt. Beim Überschreiten einer solchen Grenze kann es zu kritischen Zuständen, beispielsweise zu einem Aufbrechen der direkten bzw. unmittelbaren Koppelung kommen, nachdem der Industrieroboter der Bewegungsvorgabe des Benutzers nicht mehr unmittelbar folgen kann oder darf. Solche Beschränkungen können beispielsweise durch technisch bedingte Grenzwerte oder durch sicherheitsbedingte Grenzen, insbesondere durch Geschwindigkeitsbeschränkungen gegeben sein, wodurch der Industrieroboter der Bewegungsvorgabe der Bedienperson nicht schnell genug folgen kann. Es können aber auch Kraft-, Momenten- oder Leistungsgrenzen bestehen, die sich auf die maximal erzielbare Beschleunigung, Geschwindigkeit und Auslenkung auswirken können. Weiters können auch absolute Raum- oder Positionsbeschränkungen bestehen, durch welche beispielsweise Kollisionen mit benachbarten Anlagen- oder Roboterteilen verhindert werden. Es können aber auch kinematisch bedingte Einschränkungen und Begrenzungen, wie zum Beispiel eine maximale Reichweite oder ein maximaler Achs- bzw. Schwenkwinkel des Industrieroboters, bestehen.

Für eine Bedienperson, insbesondere für eine ungeübte Bedienperson, ist das Erreichen der aufbau- oder umgebungsbedingten Grenzen nicht immer unmittelbar erkennbar. Stellt die Bedienperson visuell eine Abweichung zwischen der gewünschten Bewegung, das heißt der Soll-Bewegung, und der tatsächlichen Bewegung, das heißt der Ist-Bewegung, des Industrieroboters fest, wird sie versuchen, dies durch eine Veränderung in der Bewegung des Bewegungsvorgabemittels zu korrigieren. Die Bedienperson vertraut dabei auf die unmittelbare, direkte Kopplung zum Industrieroboter und erwartet sich somit eine umgehende Repositionierung bzw. Nachführung des Industrieroboters in die gewünschte Position. Durch eine bestehende Begrenzung kann sich aber die Abweichung zwischen der Positions- und/oder Orientierungsvorgabe durch das Bewegungsvorgabemittel und der tatsächlichen Bewegung bzw. Position des Industrieroboters zusehends vergrößern bzw. verschlechtern. Das dabei für die Bedienperson überraschende bzw. nicht nachvollziehbare Aufbrechen der virtuellen, direkten Kopplung bzw. das Abdriften zwischen seiner Bedienhandlung und der Bewegung des Industrieroboters kann zu Verwirrungen und unverhältnismäßigen Gegenreaktionen der Bedienperson führen. Eine Überreaktion der Bedienperson kann beispielsweise eine ruckartige bzw. energische Bewegung des händisch zu führenden Bewegungsvorgabemittels in die gewünschte Position bzw. Verstellbewegung des Industrieroboters sein. Im schlimmsten Fall entstehen durch dieses Auseinanderdriften erhebliche Gefahrenzustände für Personen oder Objekte, insbesondere Personenschäden, Werkzeugschäden oder Werkstückschäden. In jedem Fall kommt es aber zu einer starken Verunsicherung der Bedienperson und folglich zu schlechter Akzeptanz eines Bewegungsvorgabemittels, welches eine direkt gekoppelte bzw. möglichst unverzögerte Führung eines Industrieroboters ermöglichen soll.

Die DE 43 03 264 A1 offenbart Grundzüge eines Bedienverfahrens für Industrieroboter, bei welchem die Bewegung und die Orientierung eines tragbaren Bediengeräts erfasst werden und diese Bewegungs- und Orientierungsdaten direkt in eine korrespondierende Bewegung des Industrieroboters umgesetzt wird. Weiters wird eine Bewegungseinschränkung in Bezug auf eine bestimmte Vorauswahl von Freiheitsgraden des Industrieroboters und eine Skalierung der Bewegungen beschrieben. Die Problematik in Bezug auf fallweise bestehende Positionsoder Geschwindigkeitsbeschränkungen bzw. die Probleme beim Verlust oder Auseinanderdriften der direkten, steuerungstechnischen Kopplung zwischen dem Bewegungsvorgabemittel und dem Industrieroboter wurden jedoch nicht erkannt und somit nicht behandelt.

Auch aus der DE 10 2004 020 099 A1 bzw. der EP 1 588 806 B1 ist ein Verfahren zum Programmieren oder Vorgeben von Bewegungen oder Abläufen eines Industrieroboters bekannt. Entsprechend diesem bekannten System ist ein handgeführtes Beeinflussungsmittel vorgesehen, mit welchem ein mehrachsiger Industrieroboter steuerungstechnisch beeinflusst werden kann. Hierzu wird die Position und Lage bzw. Orientierung des Beeinflussungsmittels im Raum gemessen und zum Beeinflussen des Industrieroboters verwendet. Erfindungsgemäß sollen dabei abwechselnd Bewegungen des händisch geführten Beeinflussungsmittels und zugeordnete Bewegungen des Industrieroboters durchgeführt werden. Durch das vorgeschlagene Zerlegen der Bewegungen des Industrieroboters in kurze, jeweils durch das Beeinflussungsmittel beeinflusste Teilbewegungen, wird sich trotz physikalisch bedingter Ungenauigkeiten der verwendeten Sensorik, insbesondere einer Inertial-Sensorik, eine relativ genaue, sichere und intuitive Beeinflussung, insbesondere Bewegungsprogrammierung von Industrierobotern erreicht. In dieser Schrift wird rudimentär auch auf die sicherheitstechnische Problematik der Geschwindigkeit des Industrieroboters und/oder auf die Problematik der räumlichen oder zeitlichen Skalierung der Bewegung des Industrieroboters eingegangen. Grundsätzlich geht diese Druckschrift aber von einem Bedienprinzip aus, bei welchem die Bedienperson eine kurze Teilbewegung mit einem handgeführten Beeinflussungsmittel vorzeigt und erst im Anschluss daran diese Teilbewegung vom Industrieroboter nachgemacht wird. Diese Abfolge wiederholt sich mehrfach, bis die komplette Bahn bzw. Sollstrecke abgefahren bzw. programmiert ist. Durch das abwechselnde Vorzeigen und Nachfahren von Bewegungen werden jedoch die Vorteile einer unmittelbar bzw. direkt gekoppelten Führung des Industrieroboters überhaupt nicht genutzt. Damit entsteht auch gar nicht das Problem eines Verlusts der direkten Kopplung bzw. das Problem eines Auseinanderdriftens einer vermeintlich synchronen, eventuell skalierten Kopplung zwischen den Bewegungsvorgaben der Bedienperson und den Bewegungen des Industrieroboters.

Die Problematik des Abdriftens bzw. einer allmählichen Asynchronität zwischen der Bewegungsvorgabe der Bedienperson und der Bewegungsausführung durch den Industrieroboter wird fallweise auch durch geltende Sicherheitsnormen für Industrieroboter, wie zum Beispiel durch die DIN EN ISO 10218-1 erschwert bzw. mitverursacht. Diese gültige Sicherheitsnorm legt beispielsweise verschiedene Betriebsarten fest. Unter anderem ist eine Betriebsart "manuell reduzierte Geschwindigkeit" vorgeschrieben. In dieser Betriebsart, welche für das manuelle Vorgeben von Bewegungen, insbesondere für das sogenannte Teachen, relevant ist, darf die Bewegung des Industrieroboters eine Geschwindigkeit von 250 mm/s an der Werkzeugaufnahme bzw. am Werkzeugaufnahmepunkt (TCP) nicht überschreiten. Diese Geschwindigkeitsbeschränkung dient zur Wahrung der Sicherheit der Bedienperson, die unter Umständen direkt am Industrieroboter bzw. in unmittelbarer Nähe zu bewegten Maschinenteilen arbeitet. Diese unmittelbare Nähe ist vor allem beim Teachen, wo das visuelle Feedback für die Bedienperson wesentlich ist, ein Erfordernis bzw. ein großes Anliegen. Die Vorschrift der Beschränkung der Geschwindigkeit beim sogenannten Teachen, währenddem sich eine Bedienperson unter Umständen ohne Abtrennung durch einen Schutzzaun in unmittelbarer Nähe des Industrieroboters aufhält, ist in der Fachwelt bekannt und üblich. Diese Geschwindigkeitsbeschränkung kann aber bei der direkt gekoppelten Vorgabe von Bewegungen durch eine Bedienperson bzw. bei der unmittelbaren, im Wesentlichen unverzögerten Umsetzung durch einen Industrieroboter hinderlich sein bzw. die vorhergehend beschriebenen Probleme nach sich ziehen.

Der vorliegenden Erfindung liegt die Aufgabe zugrunde, ein Verfahren zum Programmieren oder Vorgeben von Bewegungen oder Abläufen eines Industrieroboters oder einer sonstigen, mehrachsigen, steuerbaren Handhabungsvorrichtung zu schaffen, welches der Bedienperson ein möglichst komfortables Programmieren oder Vorgeben von komplexen Bewegungen, Abläufen oder Funktionen eines Industrieroboters ermöglicht und Probleme in Verbindung mit einem Auseinanderdriften der Bewegungsvorgabe der Bedienperson und der Bewegungsausführung durch den Industrieroboter in einfacher Art und Weise zur Gänze oder möglichst vollständig unterbindet. Insbesondere ist ein Verfahren anzugeben, welches Verwirrungen der Bedienperson und damit einhergehende, unverhältnismäßige Gegenreaktionen der Bedienperson während eines Bewegungsvorgabeprozesses mit direkt bzw. synchron gekoppelter Bewegungsausführung durch den Industrieroboter effektiv vermeidet oder möglichst umfassend ausschließt.

Die genannte Aufgabe der Erfindung wird durch ein Verfahren entsprechend den Merkmalen im Anspruch 1 gelöst.

Vorteilhaft ist dabei, dass kritische Asynchronitäten bzw. zu große zeitliche Verschiebungen zwischen der Bedienhandlung der Bedienperson und der Bewegungsausführung durch den Industrieroboter von Steuerungssystem früh- bzw. rechtzeitig unterbunden bzw. zumindest im Vorfeld signalisiert bzw. angekündigt werden, bevor kritische Zustände, insbesondere Gefahrenzustände entstehen. Insbesondere wird durch die erfindungsgemäßen Maßnahmen eine allzu große Asynchronität zwischen den Bewegungsvorgaben seitens der Bedienperson und der Bewegungsausführung durch den Industrieroboter unterbunden, indem der Industrieroboter unverzüglich gestoppt wird und/oder indem vor dem Erreichen eines kritischen Grenzwertes ein entsprechendes Signal bzw. ein Warnhinweis an die Bedienperson automatisiert abgegeben wird, bevor die Abschaltschwelle bzw. der Abschaltgrenzwert erreicht ist. Diese automatische Abschaltung und/oder Signalisierung erfolgt dabei zweckmäßigerweise durch wenigstens eine Komponente innerhalb des verteilt aufgebauten Steuerungssystems. Durch die rechtzeitige Abschaltung der Bewegungen des Industrieroboters bzw. durch die vorausgehende Signalisierung der Annäherung zu einem definierten Grenzwert wird zum Einen ein hoher Sicherheitslevel erreicht, da potentiell gefahrbringende Bewegungen des Roboters infolge irrtümlicher bzw. missverständlicher Bedienhandlungen der Bedienperson ausgeschlossen bzw. weitestgehend unterbunden werden können. Von besonderem Vorteil ist dabei das visuelle Feedback, welches die Bedienperson erhält, während sie dem Industrieroboter bzw. einer vergleichbaren, mehrachsig steuerbaren Handhabungsvorrichtung die gewünschten bzw. geforderten Bewegungen mittels dem händisch geführten Bewegungsvorgabemittel vorgibt. Abweichungen zwischen der gewünschten Soll-Position bzw. Soll-Bewegung und der jeweiligen Ist-Position bzw. Ist-Bewegung des Industrieroboters werden dabei von der Bedienperson intuitiv kompensiert. Insbesondere fungiert dabei die Bedienperson durch die direkte, steuerungstechnische Kopplung des Bewegungsvorgabemittels mit dem Industrieroboter quasi als menschliche Reglereinheit. In diesem Zusammenhang ist es von besonderer Bedeutung, dass der Industrieroboter dann, wenn eine zeitlich zu große Asynchronität zwischen den Bewegungsvorgaben bzw. Bedienhandlungen der Bedienperson und den tatsächlichen Bewegungsausführungen bzw. Bewegungspositionen des Industrieroboters besteht, der Industrieroboter umgehend oder nach einer definierten, relativ kurzen Nachlaufphase automatisch gestoppt wird, sodass für die Bedienperson ein unmissverständliches, absolutes Feedback bzw. Indiz dafür vorliegt, dass die Bewegungsvorgabe und die Bewegungsausführung zu stark auseinander gedriftet sind. Das Stoppen der Bewegungsausführung des Industrieroboters kann also von der Bedienperson zum Einen als unmissverständliches Kennzeichen bzw. Indiz für eine vorauseilende bzw. zu schnelle Bewegungsvorgabe erkannt werden bzw. als rechtzeitige Sicherheitsabschaltung verstanden werden, bevor ein potentiell gefahrbringender Zustand eintritt. Die automatische Abschaltung der Bewegungsausführung des Industrieroboters während einer Online-Bewegungsvorgabe durch eine Bedienperson dient dabei der rechtzeitigen Abwehr von kritischen Zuständen. Zweckmäßig ist es dabei, wenn im Vorfeld der Abschaltung der Bewegungsausführung des Industrieroboters seitens des Steuerungssystems ein korrespondierender Hinweis bzw. eine Vorwarnung gegenüber der Bedienperson ausgegeben wird, um unliebsame bzw. unbequeme Abschaltungen zu reduzieren bzw. in vielen Fällen vermeiden zu können. Insbesondere kann durch diesen Warnhinweis bzw. durch diese geeignet signalisierte Vorankündung die Bedienperson unter Umständen noch geeignet reagieren, beispielsweise die Bedienhandlungen bzw. Bewegungsvorgaben verlangsamen oder in einer sonstigen, adäquaten Weise anpassen, um einer Abschaltung zuvor zu kommen. Außerdem wird es dadurch der Bedienperson deutlich erleichtert, den gesamten Bedienvorgang und Bewegungsablauf zeitlich zu optimieren. Insbesondere können dadurch zeitraubende bzw. andersartig nachteilige Abschaltungen während einer Online-Bewegungsvorgabe effizient und ohne Erhöhung von Gefahrenpotentialen vermieden bzw. kontrolliert werden. Dadurch kann die Akzeptanz des angegebenen Verfahrens zum Programmieren oder Vorgeben von Bewegungen oder Abläufen eines Industrieroboters erheblich gesteigert werden. Insbesondere sind dadurch die Vorteile einer möglichst synchronen Bewegungsvorgabe und Bewegungsumsetzung, das heißt einer möglichst unmittelbaren bzw. unverzögerten Bewegungsumsetzung ausgenutzt, ohne dass sicherheitstechnische Probleme aufgrund von Verwirrungen und unverhältnismäßigen Gegenreaktionen der Bedienperson auftreten.

Vorteilhaft sind dabei weiters die Maßnahmen nach einem oder mehreren der Ansprüche 2 bis 4, da dadurch verschiedene, unabhängig oder in Kombination verwert- bzw. auswertbare Kriterien vorliegen, welche zweckmäßigerweise zu überwachen sind, um potentiell gefahrbringende Zustände zu vermeiden. Insbesondere ist es zweckmäßig, die Bahngeschwindigkeit und Winkeländerungsgeschwindigkeit des Industrieroboters bzw. dessen TCP sowie die jeweiligen Abweichungen gegenüber der Bewegungsvorgabe zu überwachen und beim Überschreiten des jeweiligen Grenzwertes die Bewegungsausführung zu stoppen bzw. vor dem Erreichen des bzw. der jeweiligen Grenzwerte die Annäherung an den bzw. die Grenzwerte klar und ausdrücklich zu signalisieren. Verwirrungen und unverhältnismäßige Gegenreaktionen der Bedienperson können dadurch vermieden bzw. nahezu ausgeschlossen werden, wodurch die mit dem angegebenen Verfahren erzielbare Sicherheit vor Personen- und Sachschäden erhöht und zugleich die Akzeptanz des angegeben Verfahrens bzw. Systems gesteigert werden kann.

Von Vorteil sind auch die weiterbildenden Maßnahmen gemäß Anspruch 5, da dadurch die Bedienperson einen klaren Hinweis über das Ausmaß der erfolgten Überschreitung des oberen Grenzwertes und/oder über die Nähe zum oberen Grenzwert erhält. Insbesondere wird je nach Intensität bzw. je nach Farbe oder Farbwechsel, oder je nach Frequenz des Warnsignals für eine Bedienperson klar erkennbar, wie stark diese Grenzwertüberschreitung war bzw. wie nahe man einer Grenzwertüberschreitung und damit einer Abschaltung der Bewegungsausführung ist. Vor allem in Verbindung mit einer drohenden Bewegungsabschaltung und einem typischerweise unangenehmen Stopp der technischen Anlage ist die Signalisierung der jeweiligen Nähe zum Abschalt- bzw. Stoppzeitpunkt von besonderem, praktischem Nutzen.

Von Vorteil sind auch die Maßnahmen nach Anspruch 6, da dadurch je nach verwendeter Signalisierungsart eine möglichst optimale bzw. zuverlässige Erregung von Aufmerksamkeit seitens der Bedienperson erzielt werden kann. Insbesondere kann durch zumindest eine der angegebenen Signalisierungsarten in Abhängigkeit der jeweiligen Umgebungsbedingungen stets eine zuverlässige Bemerkbarkeit des jeweiligen Warn- bzw. Signalisierungshinweises gegenüber der Bedienperson erzielt werden.

Von Vorteil sind auch die Maßnahmen gemäß Anspruch 7, da dadurch eine entsprechende Signalisierung relativ nahe zur Bedienperson bzw. unmittelbar bei der Bedienperson erfolgt und somit ein Übersehen des entsprechenden Warnhinweises bzw. Informationssignals nahezu ausgeschlossen werden kann. Vor allem wird dadurch trotz der hohen, örtlichen Flexibilität der Bedienperson in Verbindung mit dem händisch zu führenden Bewegungsvorgabemittel eine zuverlässige Informationsweiterleitung bzw. eine hochzuverlässige Kenntnisnahme seitens der Bedienperson erzielt. Insbesondere kann je nach den vorliegenden Umgebungsbedingungen eine angepasste, ausreichend hohe Auffälligkeit des Warnsignals erreicht werden.

Von Vorteil sind auch die Maßnahmen nach Anspruch 8, da dadurch frühzeitige bzw. vorzeitige Signalisierungen oder Warnungen bzw. Abschaltungen vermieden werden können und dadurch unnötige Stillstandszeiten bzw. Zeitverluste reduziert werden können. Auch dadurch kann die Akzeptanz des angegebenen Verfahrens zum Führen von Industrierobotern weiter gesteigert werden. Insbesondere unter Berücksichtigung von situationsabhängigen Sicherheitsregeln bzw. Sicherheitsrisiken kann eine entsprechend angepasste Grenzwertbildung bzw. eine korrespondierende Grenzwertvariation von hohem Nutzen sein.

Von Vorteil sind auch die Maßnahmen nach Anspruch 9, da dadurch eine benutzerseitige Quittierung bzw. ein manueller Neustart nach einer automatisierten Abschaltung der Bewegungsausführung zwingend erforderlich wird. Insbesondere wird dadurch ein selbsttätiges Wiederanlaufen von Roboterbewegungen ausgeschlossen und werden somit potentielle Gefahren minimiert. Insbesondere wird dadurch die Sicherheit des angegebenen Verfahrens zum Vorgeben oder Programmieren von Bewegungen oder Abläufen eines Industrieroboters weiter gesteigert.

Eine vorteilhafte Maßnahme ist weiters in Anspruch 10 angegeben. Dadurch wird ein sicherheitstechnisch zulässiger, oberer Grenzwert in Bezug auf die maximal erlaubte Verfahrgeschwindigkeit des Industrieroboters bzw. seiner bewegten Teile eingehalten. Die vom Industrieroboter ausgeführte Bewegung bzw. die vom Industrieroboter umzusetzende Bahnkurve, welche von der Bewegungsvorgabe durch das händisch geführte Bewegungsvorgabemittel abgeleitet ist, wird dabei möglichst genau nachgefahren, sodass eine exakte Bewegungsumsetzung durch den Industrieroboter gewährleistet ist.

Eine weitere vorteilhafte Möglichkeit zur Einhaltung einer zulässigen Maximalgeschwindigkeit von Stellbewegungen des Industrieroboters ist in Anspruch 11 gekennzeichnet. Dabei wird der Industrieroboter ausgehend von seiner Momentan-Position möglichst rasch in die Soll-Position entsprechend der jeweils aktuellen Bewegungsvorgabe bewegt. Etwaige Kurvenbahnen in der Bewegungsvorgabe werden dabei - sofern möglich - abgekürzt bzw. werden vom Steuerungssystem Bewegungsbahnen ermittelt, welche im Hinblick auf eine möglichst rasche Erreichung des Zielpunktes bzw. der Soll-Position optimiert sind. Insbesondere wird dadurch eine möglichst rasche Zielerreichung gewährleistet.

Darüber hinaus sind auch die Maßnahmen gemäß Anspruch 12 von Vorteil. Dabei folgt der Industrieroboter der Bewegungsvorgabe bis zum Erreichen der Geschwindigkeitsgrenze quasi starr gekoppelt bzw. unmittelbar bewegungsgekoppelt. Sobald die Geschwindigkeit der Bedienhandlung die maximal erreichbare bzw. die zulässige Geschwindigkeit übersteigt, so folgt der Industrieroboter mit maximal erlaubter Geschwindigkeit der jeweils geltenden Richtung der Bedienbewegung - also nicht mehr starr bzw. direkt bewegungsgekoppelt, sondern mit entsprechendem Schlupf bzw. Rückstand. Wird dann die Richtung der Bedienbewegung umgekehrt, so ändert zweckmäßigerweise auch der Industrieroboter augenblicklich seine Bewegungsrichtung. Dadurch wird also eine maximal rasche Reaktion auf Bedienhandlungen erreicht bzw. erfolgt seitens des Industrieroboters kein starres Nachfahren, wenn die Bedienperson zu schnell bzw. zu weit über bestehende Bedienergrenzen hinausgeschossen ist.

Außerdem sind die Maßnahmen nach Anspruch 13 von Vorteil, da dadurch ein Nachfolgen der Bewegungsvorgabe mit minimaler Positionsabweichung des Industrieroboters entlang einer Positionsgrenze bzw. im Nahbereich einer existierenden Positionsbegrenzung erzielt wird.

Vorteilhaft sind auch die Maßnahmen gemäß Anspruch 14, da dadurch das händisch zu führende Bewegungsvorgabemittel quasi als Schieberegler fungiert, welcher eine Drehung des Industrieroboters bzw. eines seiner Stellarme oder einer sonstigen Komponente des Industrieroboters um eine definierte Achse bewirkt. Insbesondere wird dadurch eine Translationsbewegung des händisch zu führenden Bewegungsvorgabemittels in eine Rotationsbewegung am Industrieroboter umgesetzt. Dadurch werden feinfühlige Bewegungsvorgaben ermöglicht.

Von Vorteil sind auch die Maßnahmen nach Anspruch 15 bzw. 16, da dadurch mit dem händisch zu führenden Bewegungsvorgabemittel eine Art "Schraubendreher"-Funktion umgesetzt wird. Dabei wird aufgrund einer Drehbewegung des bevorzugt länglichen, beispielsweise stiftähnlichen, Bewegungsvorgabemittels eine lineare Bewegung des Industrieroboters bzw. eines seiner Stellarme oder Komponenten ausgeführt. Durch diese Gestik können vor allem Bewegungs- bzw. Positioniervorgänge initiiert werden, welche eine hohe Genauigkeit erfordern bzw. eine Herabsetzung der Bewegungsgeschwindigkeit des Industrieroboters erfordern und dementsprechend einleiten. Insbesondere kann durch diese Verfahrensmaßnahmen bzw. durch diese Gestik-Abläufe mit dem händisch zu führenden Bewegungsvorgabemittel rasch und einfach zwischen einer üblichen Positionierung mit normaler Bewegungsgeschwindigkeit und einer Feinpositionierung mit reduzierter Bewegungsgeschwindigkeit und erhöhter Positioniergenauigkeit umgeschaltet werden.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel eines Steuerungssystems für einen Industrieroboter, in welchem ein händisch zu führendes Bewegungsvorgabemittel zur Generierung von Steueranweisungen für den Industrieroboter eingesetzt wird;
- Fig. 2: ein exemplarisches Ablaufdiagramm zur Veranschaulichung von Abläufen und Bedingungen im Steuerungssystem nach Fig. 1.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

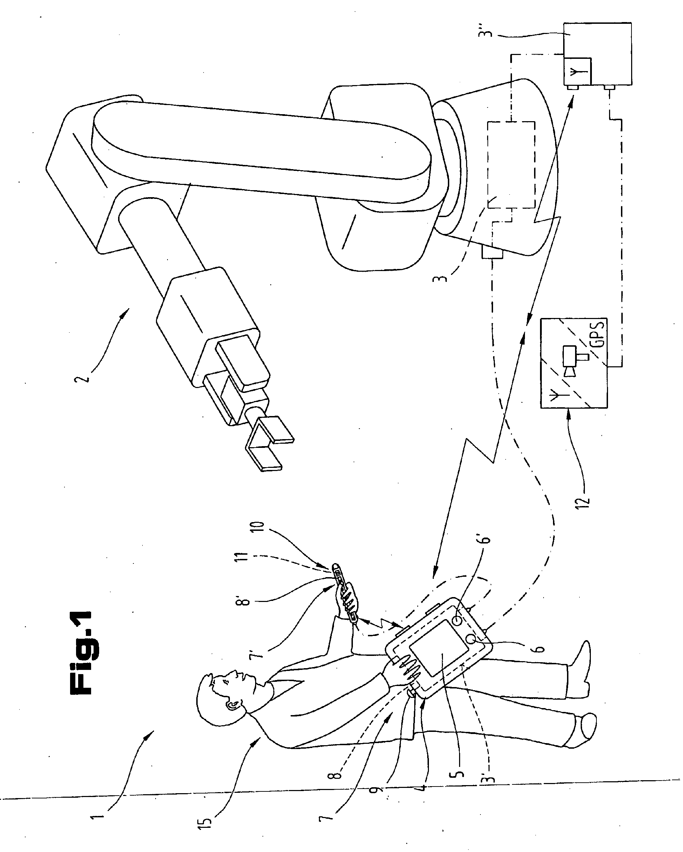

In Fig. 1 ist ein Steuerungssystem 1 schematisch und beispielhaft veranschaulicht, mit welchem eine Programmierung oder Vorgabe von Bewegungen oder Abläufen eines Industrieroboters 2 ermöglicht wird. Dieser Industrieroboter 2 kann durch eine aus dem Stand der Technik bekannte, mehrachsige Manipulatoreinheit oder durch ein sonstiges Handling-Aggregat gebildet sein, mit welchem technische Prozesse, beispielsweise Schweiß- oder Lackierprozesse oder Handlingprozesse für Werkstücke, automatisiert oder teilautomatisiert ausgeführt werden können.

Dem zumindest einen Industrieroboter 2 innerhalb des Steuerungssystems 1 ist zumindest eine integrierte und/oder externe Steuervorrichtung 3, 3', 3" zugeordnet. Das Steuerungssystem 1 kann durch beliebige aus dem Stand der Technik bekannte, elektrotechnische Steuervorrichtungen 3, 3', 3" gebildet werden, wobei je nach technologischem Bedarf zentrale und/oder dezentrale Steuerungsarchitekturen eingesetzt sein können. Insbesondere kann durch ein Zusammenwirken mehrerer integrierter und/oder externer Steuervorrichtungen 3, 3', 3" ein verteiltes Steuerungssystem 1 aufgebaut werden, um die jeweiligen Steuerungsabläufe für einen mehrachsigen Industrieroboter 2 bewerkstelligen zu können.

Entsprechend einer zweckmäßigen, beispielhaft dargestellten Ausführungsform ist im Steuerungssystem 1 wenigstens eine mobile, insbesondere ein tragbare, Steuervorrichtung 3' implementiert bzw. implementierbar. Diese mobile bzw. tragbare Steuervorrichtung 3' kann zumindest einen Teil der Steuerungsaufgaben im Steuerungssystem 1 übernehmen bzw. kann die tragbare Steuervorrichtung 3' bei Bedarf in das Steuerungssystem 1 eingebunden werden, um Steuerungsabläufe des Industrieroboters 2 beeinflussen und/oder beobachten zu können. Eine solche mobile Steuervorrichtung 3' ist üblicherweise in einem mobilen, insbesondere tragbaren Handterminal 4 angeordnet, wie es aus dem Stand der Technik in zahlreichen Ausführungen bekannt ist. Das Steuerungssystem 1 kann also zumindest ein permanent eingebundenes und/oder zumindest ein bedarfsweise einbindbares sowie bei Bedarf aus dem Steuerungssystem 1 entkoppelbares, mobiles Handterminal 4 umfassen.

Dieses mobile Handterminal 4 umfasst eine Mehrzahl von Ein- und Ausgabeelementen, um damit Steuerungsabläufe im Steuerungssystem 1 beobachten und/oder verändern zu können. Diese Ein- und Ausgabeelemente sind in an sich bekannter Weise durch wenigstens ein Display 5, bevorzugt in Art eines Touchscreen, und durch wenigstens ein Bedienelement 6, 6' gebildet. Das wenigstens eine Bedienelement 6, 6' kann dabei durch ein mehrachsiges Bedienelement, insbesondere durch einen Joystick, ein Jog-Rad und/oder durch herkömmliche Schalter und Tastelemente gebildet sein, um Steuerungsabläufe beeinflussen, insbesondere Steuerungsparameter verändern zu können.

Wenigstens ein Bedienelement 6, 6' am mobilen Handterminal 4 ist auch zur softwarebasierten, menügeführten Interaktion mit der Bedienperson vorgesehen, nachdem das mobile Handterminal 4 quasi als Mensch-Maschine-Schnittstelle (HMI) gegenüber dem Industrieroboter 2 fungiert..

Das mobile Handterminal 4 umfasst in an sich bekannter Weise wenigstens eine Sicherheitsschalteinrichtung 7 zum bedienerseitigen Beeinflussen bzw. Kontrollieren von potentiell sicherheitskritischen Bewegungen oder Abläufen des Industrieroboters 2. Unter potentiell sicherheitskritischen Bewegungen oder Abläufen sind dabei vor allem Verfahrbewegungen, Zustandsveränderungen oder Prozessaktivierungen zu verstehen, welche eine potentielle Gefährdung für Personen, Einrichtungen oder Gegenstände darstellen könnten. Insbesondere soll mittels der Sicherheitsschalteinrichtung 7 das Gefahrenpotential im Hinblick auf eine Gefährdung von Personen und/oder im Hinblick auf Sachschäden minimiert werden, wobei dieses Gefahrenpotential auch auf den Industrieroboter 2 per se und auf umliegende technische Einrichtungen sowie auf die zu bearbeitenden Prozesse oder Werkstücke zu beziehen ist. Unter dem Begriff Industrieroboter 2 sind dabei auch vergleichbare technische Maschinen oder Maschinenanlagen mit einem bestimmten Automatisierungspotential zu verstehen.

Die Sicherheitsschalteinrichtung 7 im bzw. am mobilen Handterminal 4 umfasst zumindest einen Zustimmtaster 8 und gegebenenfalls eine Not-Aus-Schaltvorrichtung 9, wie dies in Fig. 1 schematisch veranschaulicht wurde. Die Sicherheitstechnik zur fehlersicheren und möglichst zuverlässigen Auswertung der entsprechenden Betätigungszustände ist zumindest teilweise im mobilen Handterminal 4 implementiert. Hierfür ist eine möglichst fehlersichere, insbesondere mehrkreisige Auswertung im Handterminal 4 angeordnet. Bevorzugt ist auch eine sicherheitstechnisch überprüfte Auswertungssoftware für die Sicherheitsschalteinrichtung 7 bzw. für den zumindest einen Zustimmtaster 8 im Handterminal 4 bzw. im Steuerungssystem 1 implementiert.

Mit dem mobilen Handterminal 4 ist dabei eine umfassende Veränderung und/oder Beobachtung von Betriebszuständen oder Abläufen des Industrieroboters 2 ermöglicht. Hierzu wird das Display 5 und wenigstens ein Bedienelement 6, 6' des Handterminals 4 von einer entsprechend befugten Bedienperson eingesetzt. Das mobile, insbesondere tragbare Handterminal 4 wird dabei zweckmäßigerweise von einer Hand der Bedienperson derart gehalten, dass dessen Display bzw. dessen Bedienelemente 6, 6' einsehbar sind. Bei bestimmten Handlungen oder Situationen ist es jedoch auch möglich, das Handterminal 4 am Körper der Bedienperson zu tragen, insbesondere einzustecken oder mittels einer Haltespange am Körper bzw. an der Kleidung der Bedienperson zu befestigen, sodass ein manuelles Halten des Handterminals 4 erübrigt ist. Hierfür können auch Halteschlaufen oder Traggurte eingesetzt werden, welche um den Rumpfbereich oder um den Hals der Bedienperson geführt sind.

Vorzugsweise ist das Gehäuse des Handterminals 4 derart geformt bzw. ausgebildet, dass es Gehäuseabschnitte oder Griffelemente aufweist, die es ermöglichen, das Handterminal 4 bequem mit nur einer Hand zu halten und gleichzeitig mit der gleichen Hand bzw. mit den Fingern dieser Hand wenigstens einen Zustimmtaster 8 für eine bedarfsweise Signalisierung einer Zustimmung zu einer Verfahrbewegung oder Ablaufveränderung betätigen zu können. Die entsprechenden Gehäuseabschnitte oder Griffelemente sind dabei derart ausgeführt, dass bei nach unten hängender Hand der Bedienperson ein sicheres Halten und ein bedarfsweises Betätigen der Sicherheitsschalteinrichtung 7 ermöglicht ist. Ein ständiger Blick auf die Ein- und Ausgabeelemente, insbesondere auf das Display 5 und auf die Bedienelemente 6, 6' ist vor allem in Verbindung mit dem angegebenen Bedienkonzept nicht zwingend erforderlich.

Zweckmäßig ist es also, wenn die Sicherheitsschalteinrichtung 7, insbesondere wenigstens ein Zustimmtaster 8, welchem erhöhte Funktions- bzw. Fehlersicherheit zugrunde liegt, am mobilen Handterminal 4 derart positioniert ist, dass mit nur einer Hand der Bedienperson ein komfortables Halten des mobilen Handterminals 4 ermöglicht ist und mit der selben Hand oder mit zumindest einem Finger dieser Hand eine bedarfsweise Betätigung der Sicherheitsschalteinrichtung 7, insbesondere von wenigstens einem Zustimmtaster 8 erfolgen kann.

Entsprechend dem gekennzeichneten Vorgehen in Zusammenhang mit der Programmierung oder Vorgabe von Bewegungen oder Abläufen eines Industrieroboters 2 ist alternativ oder zusätzlich zu diesem mobilen Handterminal 4 ein händisch zu führendes Bewegungsvorgabemittel 10 vorgesehen. Das mobile Handterminal 4 mit hoher Funktionsdichte bzw. Funktionsvielfalt stellt dabei ein erstes bzw. relativ hochentwickeltes Bedien- und Beobachtungsgerät für die jeweiligen Steuerungsabläufe im Steuerungssystem 1 dar. Demgegenüber kann das alternativ oder in Kombination mit dem Handterminal 4 einsetzbare Bewegungsvorgabemittel 10 als alternatives, eigenständiges Bedienteil oder als Zusatzmodul bzw. als Erweiterungskomponente bezeichnet werden. In jedem Fall wird durch das händisch zu führende, im Raum frei bewegliche Bewegungsvorgabemittel 10 die Vorgabe oder Programmierung von Bewegungsabläufen eines Industrieroboters 2 wesentlich erleichtert. Das Bewegungsvorgabemittel 10 kann somit als sekundäres bzw. zusätzliches Bedienteil oder als eigenständiges Bedienteil ausgeführt sein, welches unabhängig von einem mobilen Handterminal 4 einsetzbar ist. Vor allem in letzterem Fall weist das händisch zu führende Bewegungsvorgabemittel 10 zumindest eine Sicherheitsschaltvorrichtung 7', insbesondere wenigstens einen Zustimmtaster 8' auf, welcher zur bedienerseitigen Signalisierung einer Zustimmung zur Ausführung potentiell gefahrbringender Bewegungen oder Ablaufveränderungen vorgesehen ist.

Das händisch zu führende Bewegungsvorgabemittel 10 ist möglichst leicht und kompakt aufgebaut, beispielsweise stiftartig oder pistolenartig ausgeführt, um eine intuitive und möglichst bequeme Bewegungsvorgabe gegenüber dem Industrieroboter 2 zu erreichen. Zur Interaktion zwischen Bedienperson und Steuerungssystem 1 kann das Bewegungsvorgabemittel 10 diverse Ein- und Ausgabeelemente, beispielsweise Tasten, Schalter, Leuchtdioden oder ein kleines Display aufweisen.

Wesentlich ist, dass mit dem von der Bedienperson händisch zu führenden Bewegungsvorgabemittel 10 zumindest ein Teil der Daten für die Bewegungsteuerung oder Ablaufprogrammierung des Industrieroboters 2 generiert wird. Hierzu gibt die Bedienperson mittels dem Bewegungsvorgabemittel 10 quasi eine Sollbewegung und/oder eine Sollposition bzw. Sollorientierung vor, welche vom Steuerungssystem 1 derart umgesetzt wird, dass der zu steuernde bzw. zu bedienende Industrieroboter 2 vorgabegemäße Bewegungen oder Sollpositionen einnimmt bzw. vorgabegemäße Veränderungen im jeweiligen, technischen Ablauf bzw. Prozessablauf umgesetzt werden. Das händisch zu führende Bewegungsvorgabemittel 10 weist eine integrierte Sensorik 11 auf bzw. ist dem händisch zu führenden Bewegungsvorgabemittel 10 eine externe Sensorik 12 zugeordnet, über welche die Orientierung und/oder die Position des händisch geführten Bewegungsvorgabemittels 10 im Raum ermittelt bzw. ausgewertet wird. Die Informationen bzw. Daten der integrierten und/oder externen Sensorik 11, 12 stellen sodann zumindest einen Teil jener Daten bzw. Steuerbefehle dar, welche für die Bewegungssteuerung oder Ablaufprogrammierung des Industrieroboters 2 verwendet bzw. benötigt werden.

Das Bewegungsvorgabemittel 10 kann entsprechend einer möglichen Ausführungsform ausschließlich eine integrierte Sensorik 11 umfassen und somit quasi als aktives Bewegungsvorgabemittel 10 fungieren. Alternativ dazu kann das Bewegungsvorgabemittel 10 auch passiv ausgeführt sein, wobei über eine externe Sensorik 12 die entsprechenden Orientierungsund/oder Positionsdaten ermittelt werden bzw. deren zeitliche Veränderung aufgezeichnet wird. Selbstverständlich ist auch eine Kombination aus integrierter und externer Sensorik 11, 12 möglich, um beispielsweise eine besonders zuverlässige bzw. hochgenaue Ermittlung von Orientierungs- bzw. Positionsdaten des Bewegungsvorgabemittels 10 in Bezug auf den dreidimensionalen Raum zu erzielen. Unter dem Begriff Sensorik 11, 12 ist neben den eigentlichen sensorischen Erfassungsmitteln auch ein entsprechendes Auswertungsmittel, insbesondere eine elektronische Aufbereitungs- und Auswertungsvorrichtung zu verstehen, welche die sensorisch erfassten Signale bzw. Informationen in von den Steuerungskomponenten des Steuerungssystems 1 verwertbare bzw. weiterverarbeitbare Daten bzw. Schnittstellenprotokolle transferiert.

Die jeweilige Sensorik 11, 12 kann dabei durch beliebige aus dem Stand der Technik bekannte Erfassungs- und Auswertemittel gebildet sein, um die Orientierung und/oder die Position von Objekten im Raum daten- bzw. steuerungstechnisch ermitteln bzw. bestimmen zu können. Insbesondere können hierfür sogenannte Inertial-Sensoriken vorgesehen sein, welche vorzugsweise die im Bewegungsvorgabemittel 10 integrierte Sensorik 11 definieren. Mittels diesen Inertial-Sensoren, welche aus Intertial-Gebern, Magnetfeldsensoren und Beschleunigungsaufnehmern bestehen, kann eine rechnergestützte Ermittlung von Orientierungs- bzw. Positionsdaten und deren Veränderung vorgenommen werden. Die Sensorik 11, 12 kann aber auch durch aus dem Stand der Technik bekannte Triangulationsverfahren für übertragene Signale mit bestimmter Laufzeit, durch optische Bilddatenerfassungen unter Zuhilfenahme von Videokameras, oder durch sonstige Positionserfassungssysteme, wie zum Beispiel GPS oder durch lokale Positionserfassungssysteme gebildet sein. Wichtig ist, dass die jeweils ausgebildete Sensorik 11 bzw. 12 eine ausreichend genaue und zuverlässige Ermittlung der Orientierung und/oder Position des händisch zu führenden Bewegungsvorgabemittels 10 ermöglicht.

Wesentlich ist dabei, dass die Steuerbefehle, die auf einer Vorgabe durch das händisch zu führende Bewegungsvorgabemittel 10 basieren, vom Industrieroboter 2 im wesentlichen unverzögert in korrespondierende Bewegungen oder Ablaufveränderungen umgesetzt werden. Eine der Voraussetzungen für die Umsetzung der bedienerseitigen Bewegungsvorgaben durch den Industrieroboter 2 besteht dabei darin, dass die von der Bedienperson vorgegebene Bewegung oder Ablaufveränderung unter Berücksichtigung von vordefinierten technischen Beschränkungen des Industrieroboters 2, wie beispielsweise einer aufbau- oder umgebungsbedingten Erreichbarkeit von Positionen oder Orientierungen, oder einer technisch erreichbaren, oder einer sicherheitstechnisch zulässigen, maximalen Geschwindigkeit von Achsen oder Stellelementen des Industrieroboters 2, technisch ausführbar ist.

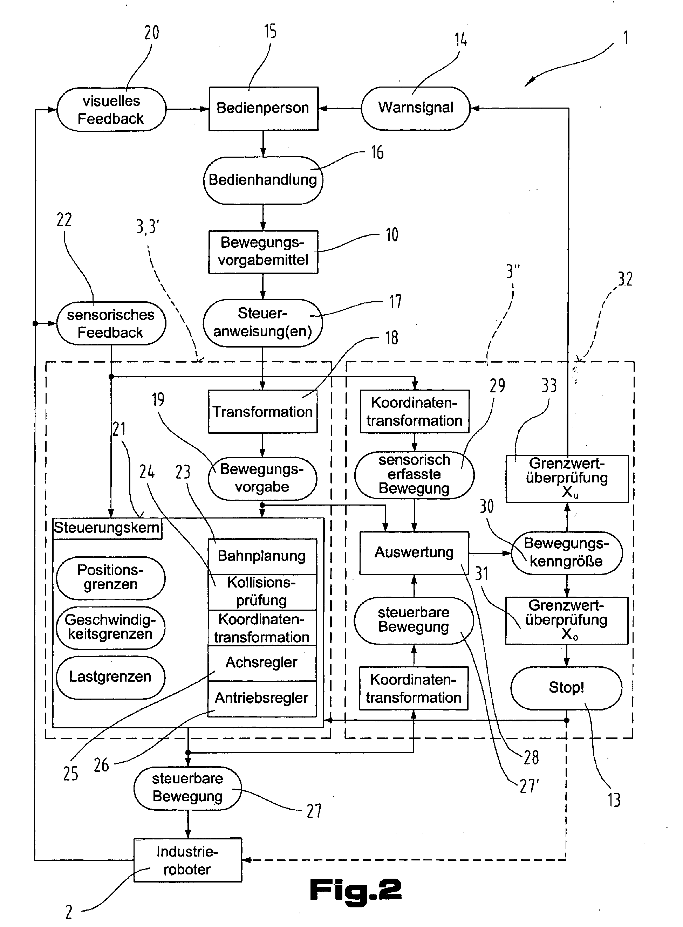

Wesentlich ist weiters, wie dies am besten in Verbindung mit Fig. 2 ersichtlich wird, dass aus der vorgabegemäß auszuführenden Bewegung oder Ablaufveränderung, das heißt aus der Bewegungsvorgabe durch das händisch zu führende Bewegungsvorgabemittel 10, eine Bewegungskenngröße 30 ermittelt und mit einem oberen Grenzwert Xₒ verglichen wird. Von Bedeutung ist in diesem Zusammenhang weiters, dass bei einem Überschreiten des oberen Grenzwertes Xₒ die Bewegung oder Ablaufveränderung des Industrieroboters 2 umgehend oder nach einer definiert begrenzten, relativ kurzen Nachlaufphase gestoppt wird, indem vom Steuerungssystem 1 eine Stoppanweisung 13 ergeht bzw. quasi generiert wird. Alternativ oder in Kombination zu dieser Stoppanweisung 13, welche aktuell ausgeführte bzw. vorgabegemäß umgesetzte Bewegungen oder Ablaufveränderungen des Industrieroboter 2 unabhängig von weiteren bzw. fortgesetzten Bewegungsvorgaben der Bedienperson umgehend oder nach einer relativ kurzen Nachlaufphase stoppt, ist es besonders zweckmäßig, dass bei definierter Annäherung der Bewegungskenngröße 30 an den oberen Grenzwert Xₒ oder bei einem Überschreiten eines unteren Grenzwertes Xᵤ, welcher niedriger als der obere Grenzwert Xₒ ist, der Bedienperson die Nähe oder Annäherung zum oberen Grenzwert Xₒ durch Abgabe eines Warnsignals 14 signalisiert wird, wie dies im Ablaufdiagramm gemäß Fig. 2 schematisch veranschaulicht wurde.

Vom Steuerungssystem 1 können dabei verschiedene Bewegungskenngrößen herangezogen werden, welche mit einem entsprechenden, oberen Grenzwert Xₒ und/oder mit einem unteren Grenzwert Xᵤ verglichen werden, um etwaige Grenzwertüberschreitungen feststellen zu können und daraufhin entsprechende Aktionen einzuleiten, insbesondere eine Beendigung der Bewegungsausführung einzuleiten bzw. um ein Vorwarnsignal 14 auszugeben, bevor die Bewegungsausführung des Industrieroboters 2 automatisiert gestoppt wird. Relevante Bewegungskenngrößen 30, welche seitens des Steuerungssystems 1 herangezogen bzw. ausgewertet werden, um sicherheitskritische bzw. anderweitig nachteilige Systemzustände zu vermeiden, sind unter anderem der vorgabegemäße Soll-Wert bzw. der Ist-Wert der Bahn- oder Verfahrgeschwindigkeit eines mit einem bestimmten Abschnitt des Industrieroboters 2 starr gekoppelten Elementes, wie beispielsweise eines Greifers oder eines Werkzeuges am Industrieroboter 2. Eine weitere relevante Bewegungskenngröße, welche seitens des Steuerungssystems 1 hinsichtlich eines oberen Grenzwertes Xₒ und/oder hinsichtlich eines unteren Grenzwertes Xᵤ zweckmäßigerweise zu überwachen ist, kann durch die Winkelgeschwindigkeit einer Achse oder eines Stellelementes des Industrieroboters 2 in Bezug auf eine bestimmte Achse definiert sein. Die zu ermittelnde bzw. wertmäßig zu überwachende Bewegungskenngröße 30 kann aber auch durch ein Maß für die momentane Abweichung zwischen der vorgabegemäß auszuführenden Bewegung und der technisch möglichen Bewegung und/oder einem sensorisch erfassten Ist-Zustand der Bewegung des Industrieroboters 2 definiert sein. Die zuvor definierten Bewegungskenngrößen 30 können dabei jeweils für sich alleine und/oder in Kombination ermittelt und mit entsprechenden Grenzwerten Xᵤ bzw. Xₒ steuerungstechnisch verglichen werden.

Entsprechend einer zweckmäßigen Ausführungsform ist vorgesehen, dass in Abhängigkeit von einem Ausmaß der Überschreitung des unteren und/oder des oberen Grenzwertes Xᵤ; Xₒ eine von der Bedienperson wahrnehmbare Eigenschaft des Warnsignals 14 verändert wird. Insbesondere kann durch Veränderung der Intensität, der Farbe, oder der Frequenz des Warnsignals 14, welches beispielsweise durch ein akustisches, optisches oder taktiles Signal gebildet sein kann, die Nähe zum oberen Grenzwert Xᵤ, insbesondere zum Abschaltschwellwert für die Bedienperson verdeutlicht werden. Insbesondere dann, wenn die Überschreitung des unteren Grenzwertes Xᵤ akustisch, optisch oder taktil, insbesondere durch Vibration, signalisiert wird, ist es möglich, dass die Bedienperson trotz erhöhter Aufmerksamkeit in Bezug auf die Soll-Bewegungen für den Industrieroboter 2, auch die Rückmeldungen des Steuerungssystems 1 zur Kenntnis nimmt bzw. darauf entsprechend Rücksicht nehmen kann. Die entsprechende Aufmerksamkeit bzw. eine gute Bemerkbarmachung einer Überschreitung des unteren und/oder oberen Grenzwertes Xᵤ; Xₒ wird vor allem dann erreicht, wenn das Warnsignal 14 zumindest am händisch zu führenden Bewegungsvorgabemittel 10 ausgegeben wird. Dieses händisch zu führende Bewegungsvorgabemittel 10 befindet sich regelmäßig im Nahbereich der Bedienperson und kann die Bedienperson somit rechtzeitig bzw. frühzeitig auf drohende oder bereits vorliegende Grenzwertüberschreitungen hingewiesen werden. Eine zuverlässige bzw. rechtzeitige Wahrnehmung des Warnsignals 14 ist auch durch ein optisches Signalmittel, beispielsweise durch eine mehrfärbige Leuchte, welches Signalmittel im Bereich des Greifers des Industrieroboters 2 angeordnet ist, erzielbar. Besondere Bedeutung kommt in diesem Zusammenhang der Signalisierung von drohenden Grenzwertüberschreitungen zu, da eine vorliegende Grenzwertüberschreitung ohnehin durch den unmittelbaren Stillstand des Industrieroboters 2 unverkennbar und augenscheinlich signalisiert wird.

Entsprechend einer zweckmäßigen Ausführung ist vorgesehen, dass der untere und/oder obere Grenzwert Xᵤ; Xₒ variabel festgelegt werden und abhängig von Betriebszuständen, Bedienungszuständen oder Umgebungsbedingungen des technischen Systems manuell geändert und/oder automatisiert angepasst werden. Dadurch kann je nach Erfordernis bzw. Systemzustand eine adaptive Grenzwertfestlegung vorgenommen werden. Vorzeitige Warnungen bzw. Abschaltungen können dadurch effektiv vermieden werden, sodass die Nutzungsakzeptanz des erfindungsgemäßen Verfahrens weiter gesteigert werden kann.

Sicherheitstechnisch günstig erweist es sich auch, dass nach einem steuerungsseitig automatisiert veranlassten Stopp der Bewegung oder Ablaufveränderung des Industrieroboters 2, welcher Stopp aufgrund einer Überschreitung des oberen Grenzwertes Xₒ automatisiert eingeleitet wurde, eine Fortsetzung von Bewegungen oder Ablaufveränderungen erst nach Betätigung eines definierten Bedienelementes durch eine Bedienperson wieder freigegeben wird. Überraschende bzw. nicht vorgesehene Reaktivierungen des Industrieroboters 2 können dadurch verhindert werden.

Zur Einhaltung einschlägiger Sicherheitsbestimmungen, insbesondere zur Einhaltung einer Geschwindigkeitsbeschränkung im Zuge der Ausführung von Bewegungen durch den Industrieroboter 2 während dem sogenannten Teachen von Bewegungsabläufen, können vom Steuerungssystem 1 einzelne oder mehrere der nachfolgenden Maßnahmen eingeleitet werden. Zum einen ist es zweckmäßig, wenn das Steuerungssystem 1 zur Einhaltung einer maximal zulässigen Verfahrgeschwindigkeit des Industrieroboters 2 ein geschwindigkeitsbegrenztes Nachfahren der Bewegungsvorgabe des händisch zu führenden Bewegungsvorgabemittels 10 veranlasst. Zur Einhaltung von Geschwindigkeitsbeschränkungen ist es auch möglich, dass vom Steuerungssystem 1 ein geschwindigkeitsbegrenztes Ansteuern der zeitlich jüngsten Position und/oder Orientierung in Bezug auf die Bewegungsvorgabe des händisch zu führenden Bewegungsvorgabemittels 10 veranlasst wird. Weiters kann vom Steuerungssystem 1 zur Einhaltung einer Geschwindigkeitsbeschränkung für eine zulässige oder technisch ausführbare Bewegung eine geschwindigkeitsbegrenzte Bewegung des Industrieroboters 2 in die zum jeweiligen Zeitpunkt vorliegende Richtung der Bewegungsvorgabe des händisch zu führenden Bewegungsvorgabemittels 10 veranlasst werden. Zur Einhaltung einer Positions- und Koordinatenbeschränkung für eine zulässige oder technisch ausführbare Bewegung kann vom Steuerungssystem 1 auch ein Anfahren bzw. Ansteuern eines in Bezug auf die Bewegungsvorgabe durch das händisch zu führende Bewegungsvorgabemittel 10 geometrisch nächstliegenden, zulässigen Punktes veranlasst werden.

Entsprechend einer zweckmäßigen Gestik bzw. Bewegungsvorgabe ist vorgesehen, dass infolge einer translatorischen Positionsveränderung des händisch zu führenden Bewegungsvorgabemittels 10 eine Drehung eines Abschnittes oder eines Armes des Industrieroboters 2 um eine bestimmte Raumachse bewirkt wird. Das heißt, dass eine translatorische Verstellbewegung des beispielsweise stiftartigen Bewegungsvorgabemittels 10 eine Drehung des Industrieroboters 2 bzw. eines seiner Arme um eine entsprechende Raum- bzw. Roboterachse bewirkt. In Entsprechung dazu, kann vorgesehen sein, dass zufolge einer Rotation des händisch zu führenden Bewegungsvorgabemittels 10 um eine Gehäuseachse bzw. um eine Längsachse des Bewegungsvorgabemittels 10 eine translatorische Bewegung eines Elementes des Industrieroboters 2 entlang einer definierten, auswählbaren Raumachse bewirkt wird. Das heißt, dass Drehungen des Bewegungsvorgabemittels 10 in Bezug auf den damit steuerungstechnisch gekoppelten Industrieroboter 2 eine Linearbewegung hervorrufen, während translatorische Verstellbewegungen des Bewegungsvorgabemittels 10 eine Drehbewegung am Industrieroboter 2 hervorrufen. Durch diese Maßnahmen werden die Bedienhandlungen eines virtuellen Schiebereglers bzw. eines virtuellen Drehreglers in rotatorische bzw. translatorische Verstellbewegungen des Industrieroboters 2 umgesetzt. Dadurch lassen sich klare, systematische Abgrenzungen, beispielsweise zwischen Grob- und Feinpositionierung, intuitiv logisch unterscheiden bzw. abgrenzen. Zweckmäßig ist es dabei, wenn die Raumachse für die gewünschte Bewegung des Industrieroboters 2 durch die Lage der Gehäuseachse im Raum, beispielsweise durch die Gehäuselängsachse des händisch zu führenden Bewegungsvorgabemittels 10, festgelegt wird.

Fig. 2 zeigt stark schematisiert einige beteiligte Komponenten und Kriterien, welche auf die Umsetzung des erfindungsgemäßen Verfahrens Einfluss haben.

Im linken Teil bzw. in der linken Hälfte von Fig. 2 sind im Wesentlichen die herkömmlichen Verhältnisse und Komponenten gemäß dem Stand der Technik symbolisiert. Eine Bedienperson 15 führt dabei mit dem Bewegungsvorgabemittel 10 eine bestimmte Bedienhandlung 16 aus, welche in eine proportionale Bewegung des Industrieroboters 2 umgesetzt werden soll. Hierzu werden die entsprechenden Achsen bzw. Stellarme des Industrieroboters 2 entsprechend angesteuert bzw. aktiviert. Die Positions- bzw. Orientierungsdaten des Bewegungsvorgabemittels 10, welche quasi manuelle Steueranweisungen 17 darstellen, werden dabei fortlaufend durch eine rechnerische Transformation 18 in eine Bewegungsvorgabe 19 umgerechnet. Dieser Bewegungsvorgabe 19 soll der Industrieroboter 2 möglichst unmittelbar, insbesondere möglichst unverzögert folgen. Während jedoch die Bedienperson 15 in ihren Bedienhandlungen 16 weitgehendst uneingeschränkt ist bzw. mit dem händisch zu führenden Bewegungsvorgabemittel 10 relativ frei verfahren kann und auch mit vergleichsweise hoher Bewegungsgeschwindigkeit agieren kann, ist die vom Industrieroboter 2 möglichst unmittelbar umzusetzende, korrespondierende Bewegung einer Mehrzahl von Beschränkungen unterworfen. Eine erste Beschränkung des Industrieroboters 2 liegt in der sicherheitstechnisch zulässigen, maximalen Geschwindigkeit während einem sogenannten Teachprozess. Eine weitere Beschränkung des Industrieroboters 2 liegt in der technisch realisierbaren Geschwindigkeit, das heißt in der maximalen Verstellgeschwindigkeit von gewissen Antrieben bzw. Stellarmen. Eine weitere Beschränkung kann durch die Erreichbarkeit bestimmter Positionen und Bahnen definiert sein, welcher der Industrieroboter 2 aufgrund vorgegebener Kinematik bzw. Konstruktion oder aufgrund von Leistungsgrenzen noch erreichen kann.

Die Bedienperson 15 hat während der Arbeit mit dem händisch zu führenden Bewegungsvorgabemittel 10 zumindest zu den wesentlichen Teilen oder Abschnitten des Industrieroboters 2, insbesondere zum ToolCenterPoint (TCP) bzw. zum eingesetzten Werkzeug sowie zum Werkstück und den wesentlichen Abschnitten des Arbeitsbereiches oder Umfeldes des Industrieroboters 2, idealerweise freie bzw. gute Sicht. Während dem Bedienvorgang erhält die Bedienperson 15 somit ständig ein visuelles Feedback 20 über den Ist-Zustand, insbesondere über den Ist-Bewegungszustand des Industrieroboters 2 und kann somit eventuelle Abweichungen zwischen dem festgestellten und dem gewünschten Bewegungszustand durch eine angepasste Bedienhandlung 16 mit dem Bewegungsvorgabemittel 10 intuitiv und unmittelbar ausgleichen. Dieses Vorgehen ist dabei ähnlich der Cursorsteuerung mit einer Computermaus und erfolgt üblicherweise in mehreren Schritten. Dabei wird zunächst eine Grobpositionierung vorgenommen, die Abweichung zum eigentlichen Zielpunkt visuell wahrgenommen und sodann in einem Schritt oder in mehreren iterativen Korrekturschritten eine Feinpositionierung vorgenommen. Anders als bei einem virtuellen, masselosen Mauszeiger, sind jedoch der unmittelbar an die Bewegungsvorgabe gekoppelten Bewegung des Industrieroboters 2 auch die bereits beschriebenen, technischen und/oder sicherheitstechnischen Grenzen bzw. Beschränkungen gesetzt, sodass diese unmittelbare bzw. starre Verbindung, insbesondere die steuerungstechnische Kopplung zwischen der Bedienhandlung 16 der Bedienperson 15 und der Roboterbewegung aufbrechen kann und dadurch die intuitive Einflußnahme der Bedienperson 15 auf den Industrieroboter 2 mehr oder weniger stark beeinträchtigt ist. Völlig anders als eine Abweichung des Ist-Bewegungszustandes des Industrieroboters 2 von einem Soll-Bewegungszustand des Industrieroboters 2 wird das Aufbrechen der virtuell starren Kopplung jedoch nicht unmittelbar visuell wahrgenommen, sondern erst ab einem vergleichsweise hohen Ausmaß von der Bedienperson 15 als ein Kontrollverlust erkannt. Dies kann zu einer erheblichen Verwirrung der Bedienperson 15 und zu unverhältnismäßigen Bedienhandlungen führen. Beispielsweise kann dadurch die Bedienperson 15 versuchen, die Kontrolle über den Industrieroboter 2 wieder zu erlangen, wobei es zu potentiell gefährlichen Bewegungszuständen kommen kann. Jedenfalls führt eine gewisse Voreilung der Bedienhandlung 16 der Bedienperson 15 bzw. ein zu starke Nacheilung der Bewegungsausführung des Industrieroboters 2 zu einer erheblichen Verunsicherung der Bedienperson 15 und somit üblicherweise zu unbefriedigenden und fallweise zu sicherheitskritischen Zuständen.

Die unmittelbar vom Bewegungsvorgabemittel 10 erhaltenen bzw. errechneten Steueranweisungen 17 stellen gewissermaßen Rohdaten dar und können beispielsweise Daten über die aktuelle Position und/oder Orientierung des Bewegungsvorgabemittels 10 sein. Es können aber auch nur die unmittelbaren Beschleunigungsdaten der integrierten Sensorik 11, insbesondere von integrierter Inertial-Sensorik sein, welche erst in einer der Steuervorrichtungen 3, 3', 3" - Fig. 1 - auf entsprechende Positions- und Orientierungsdaten umgerechnet werden.

Es handelt sich bei diesen Rohdaten jedenfalls um direkte Eingangsdaten für die Steuervorrichtung 3 bzw. 3' des Industrieroboters 2.

Die Transformation 18 der Steueranweisungen 17 in eine Bewegungsvorgabe 19 setzt die Rohdaten des Bewegungsvorgabemittels 10 in Ziel- bzw. Bahndaten für die Roboterbewegung um. Im einfachsten Fall handelt es sich beim sogenannten "direkten Mitnehmen" bzw. direkt gekoppelten Führen des Industrieroboters 2 lediglich um das Addieren eines konstanten Offsets in den Positions- und Orientierungsdaten des Bewegungsvorgabemittels 10, nachdem der Industrieroboter 2 ja nicht die Position des Bewegungsvorgabemittels 10 anfahren soll, sondern sich parallel zur Bewegung des Bewegungsvorgabemittels 10 mit konstantem, vektoriellen Versatz bewegen soll. Diese Transformation 18 kann zusätzlich auch eine Skalierung umfassen, durch welche weitreichende Roboterbewegungen durch raumsparende Bedienhandlungen umgesetzt werden können. In diesem Fall weist der Skalierungsfaktor einen Wert größer 1 auf. Umgekehrt können mit einem solchen Skalierungsfaktor auch sehr feine Positionieraufgaben gut bewerkstelligt werden. In diesem Fall weist der Skalierungsfaktor einen Wert kleiner 1 auf. Vor allem im ersten Fall kann es besonders leicht passieren, dass die Bedienperson 15 eine Roboterbewegung vorgibt, durch welche eine oder mehrere Grenzen für die zulässige Beschleunigung oder für die zulässige Geschwindigkeit überschritten werden und der Industrieroboter 2 daraufhin nicht mehr unmittelbar bzw. nicht mehr unverzögert an die Bedienhandlung gekoppelt werden kann. Die Transformation 18 kann auch eine Ausmaskierung bestimmter Koordinaten und Achsen umfassen, sodass beispielsweise nur die Bewegung des Bewegungsvorgabemittels 10 entlang einer bestimmten Koordinate oder um eine bestimmte Achse herangezogen wird und jede andere Bewegungskomponente ignoriert wird.

Aber auch die Umwandlung einer bestimmten Bewegung des Bewegungsvorgabemittels 10 in eine völlig andere Bewegungsart für den Industrieroboter 2, wie beispielsweise die Umwandlung einer Schraubendreherbewegung des Bewegungsvorgabemittels 10 in eine eher feinfühlige bzw. langsame translatorische Bewegung des Industrieroboters 2 in Richtung der Längsachse des Bewegungsvorgabemittels 10, kann im Zuge dieser Transformation 18 erfolgen. Es kann im Zuge dieser Transformation 18 auch eine Glättung der Bahndaten erfolgen, um beispielsweise Zitterbewegungen der Bedienperson 15 auszufiltern, oder um eine Reduzierung der Anzahl der Stützpunkte, oder umgekehrt, um eine Interpolation zusätzlicher Punkte zu erzielen.

Bei der aus der Transformation 18 entstehenden Bewegungsvorgabe 19 handelt es sich um Daten, insbesondere um eine Folge von Positions- und Orientierungsdaten, welche die von der Bedienperson 15 beabsichtigte Roboterbewegung beschreiben. Die Bewegungsvorgabe 19 wird nun von einem in der Fig. 2 als Steuerungskern 21 bezeichneten System aus ineinander verschachtelten Steuerungskomponenten in entsprechende elektrische Energieflüsse zur Ansteuerung der Aktoren des Industrieroboters 2 umgewandelt, welche schließlich zur Bewegung des Industrieroboters 2 führen. Über eine Mehrzahl von Sensoren wird der tatsächliche Bewegungszustand des Industrieroboters 2 fortlaufend erfasst, der Steuerung bzw. dem Steuerungskern 21 als sensorisches Feedback 22 zugeführt und zur Korrektur von Abweichungen gegenüber dem gewünschten Bewegungszustand verwendet.

Einige typische Komponenten des Steuerungskerns 21 sind in Fig. 2 in entsprechenden Blöcken exemplarisch angeführt. Diese Komponenten sind aber weder zur Gänze unbedingt notwendig noch vollständig. Der Steuerungskern 21 entspricht im Prinzip jeder beliebigen Robotersteuerung nach dem Stand der Technik. Der Steuerungskern 21 umfasst typischerweise eine Komponente zur Bahnplanung 23, die Aufgaben wie Glättung und Stützpunktinterpolation, Geschwindigkeitsvorgaben und Geschwindigkeitsüberprüfungen übernimmt, oder gewisse Bahnoptimierungen vornimmt. Auch eine oder mehrere Komponenten zur fortlaufenden Kollisionsprüfung 24 können vorgesehen sein, um drohende Kollisionen mit bestimmten benachbarten Einrichtungen und Konstruktionsteilen, oder aber auch mit der Roboterkonstruktion selbst, rechtzeitig zu erkennen und zu verhindern. Es erfolgt beispielsweise auch eine Umrechnung der Bahndaten, insbesondere von Positions- und Orientierungsdaten für den Endeffektor des Industrieroboters 2 in entsprechende Winkeldaten für die Mehrzahl von Gelenken eines Knickarmroboters. Diese Winkeldaten werden dann jeweils von zugeordneten Achsreglern 25 weiter verarbeitet und schließlich von Antriebsreglern 26 in entsprechende Leistungssignale umgesetzt. Die verschiedenen beschriebenen Komponenten des Steuerungskerns 21 können baulich kombiniert sein oder auch diskret verteilt sein, wie dies üblicherweise der Fall ist.

Wesentlich ist, dass der Steuerungskern 21 die Bewegungsvorgabe 19 nur innerhalb bestimmter Beschränkungen bzw. Grenzen, welche durch die technische Konstruktion, die Umgebung, die sicherheitstechnischen Vorgaben sowie etwaiger sonstiger Einschränkungen gegeben sind, in eine tatsächlich zulässige steuerbare Bewegung 27 des Industrieroboters 2 umsetzen kann bzw. dass der Steuerungskern 21 für die Einhaltung der entsprechenden Grenzen sorgt. Durch sicherheitstechnische oder leistungsbedingte Beschränkungen bei der Beschleunigung und in der Geschwindigkeit der einzelnen Achsen und Antriebe von bestimmten Roboterteilen, sowie durch Grenzen in Bezug auf erreichbare Positionen oder zufolge von drohenden Kollisionen, kann es daher zu zeitlichen Verzögerungen oder Bahnabweichungen zwischen der Bewegungsvorgabe 19 und der tatsächlich umgesetzten steuerbaren Bewegung 27 kommen.

Im rechten Teil bzw. in der rechten Hälfte der Fig. 2 sind diverse Komponenten, Einflussgrößen und Abhängigkeiten für die Umsetzung des erfindungsgemäßen Verfahrens dargestellt. Der Kern dieser Maßnahmen ist durch eine Analyse bzw. Auswertung 28 der Bewegungsdaten aus der Bewegungsvorgabe 19 des händisch zu führenden Bewegungsvorgabemittels 10 und/oder durch eine Analyse bzw. Auswertung 28 der Bewegungsdaten der steuerbaren Bewegung bzw. Bewegungsvorgabe 27, 27', insbesondere der Ausgangsdaten des Steuerungskerns 21 und/oder durch eine Analyse bzw. Auswertung 28 der Bewegungsdaten der sensorisch erfassten Bewegung 29 definiert. Aus dieser wenigstens einen Analyse bzw. Auswertung 28 wird schließlich eine Bewegungskenngröße 30 ermittelt, die ein Maß für die augenblickliche Auswirkung bestehender Grenzen in Bezug auf das Aufbrechen der virtuellen starren Kopplung, oder ein Maß für die Nähe bis zum beginnenden Aufbrechen dieser Kopplung darstellt.

Die ermittelte Bewegungskenngröße 30 wird einer ersten Grenzwertüberprüfung 31 unterzogen und bei Überschreitung eines oberen Schwell- bzw. Grenzwertes Xₒ wird eine unverzügliche Stillsetzung des Industrieroboters 2 veranlasst. Insbesondere wird in diesem Fall vom Steuerungssystem 1 bzw. von einer darin implementierten Steuervorrichtung 3, 3', 3" - Fig. 1 - ein Stoppsignal 13 generiert und entsprechend umgesetzt. Dies kann durch Entziehen eines Zustimmungs- bzw. Freigabesignals für die Steuervorrichtung 3, 3', 3" bzw. für den Steuerungskern 21 erfolgen oder auch direkt durch Abschalten der Antriebsenergie des Industrieroboters 2 vorgenommen werden.

Diese Bewegungskenngröße 30 kann auch durch eine sicherheitstechnisch zu überwachende Charakteristik der Bewegung definiert sein, wie etwa die Bahngeschwindigkeit an der Werkzeugaufnahme des Industrieroboters 2. Die Mittel zur Abschaltung können als spezielle Sicherheitselemente ausgeführt sein. Die Elemente im rechten, strichliert umrahmten Block der Fig. 2 können als eigenständige Sicherheitssteuerung 32 ausgebildet sein, welche in speziell sicherer Technik ausgeführt ist. Insbesondere kann eine solche Sicherheitssteuerung 32 mehrkreisig und technologisch diversitär aufgebaut sein.

Entsprechend einer weiteren, besonders zweckmäßigen Maßnahme wird die Bewegungskenngröße 30 einer weiteren bzw. zweiten Grenzwertprüfung 33 unterzogen. Wird im Zuge dieser weiteren bzw. zweiten Grenzwertüberprüfung 33 vom Steuerungssystem 1 festgestellt, dass eine Überschreitung eines unteren Grenzwertes Xᵤ vorliegt, welcher untere Grenzwert Xᵤ niedriger ist, als der obere Grenzwert Xₒ, so wird vom Steuerungssystem 1 an die Bedienperson 15 ein Warnsignal 14 abgesetzt. Dieses Warnsignal 14 liefert der Bedienperson 15 frühzeitig ein zusätzliches Feedback über einen drohenden Kontroll- bzw. Synchronitätsverlust noch bevor durch das visuelle Feedback 20 eine entsprechend ausgeprägte und offensichtliche Diskrepanz zwischen der Bedienhandlung 16 und der vom Industrieroboter 2 umgesetzten Bewegung erkennbar wird. Durch dieses Warnsignal 14 wird die Bedienperson 15 also frühzeitig bzw. möglichst rechtzeitig veranlasst, die Geschwindigkeit seiner Bedienhandlung 16 zu verlangsamen, um die direkte bzw. unverzögerte, steuerungstechnische Kopplung zu erhalten.

Es sei noch darauf hingewiesen, dass selbstverständlich auch mehrere unterschiedliche Bewegungskenngrößen 30 ermittelt und mit jeweils zugeordneten oberen und/oder unteren Grenzwerten Xᵤ; Xₒ verglichen werden können. Die Ergebnisse der jeweiligen Vergleiche können dann logisch verknüpft werden, um entsprechende Summensignale für das Stoppen des Industrieroboters 2 bzw. für die vorgelagerte, besonders zweckmäßige Signalisierung gegenüber der Bedienperson 15 zu erhalten.

Die Ausführungsbeispiele zeigen mögliche Ausführungsvarianten des Steuerungssystems 1 bzw. des damit umgesetzten Verfahrens, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvarianten möglich sind, vom Schutzumfang mit umfasst.

Der Ordnung halber sei abschließend darauf hingewiesen, dass zum besseren Verständnis des Aufbaus des beispielsweise angegeben Steuerungssystems 1 die Bestandteile des Steuerungssystems 1 stark vereinfacht und schematisiert dargestellt wurden.

Die den eigenständigen erfinderischen Lösungen zugrundeliegende Aufgabe kann der Beschreibung entnommen werden.

Vor allem können die einzelnen in den Fig. 1, 2 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Steuerungssystem
- 2: Industrieroboter
- 3, 3', 3": Steuervorrichtung
- 4: Handterminal
- 5: Display

- 6, 6': Bedienelement
- 7, 7': Sicherheitsschalteinrichtung
- 8, 8`: Zustimmtaster
- 9: NOT-AUS-Schaltvorrichtung
- 10: Bewegungsvorgabemittel

- 11: Sensorik
- 12: Sensorik
- 13: Stoppanweisung
- 14: Warnsignal
- 15: Bedienperson

- 16: Bedienhandlung
- 17: Steueranweisung
- 18: Transformation
- 19: Bewegungsvorgabe
- 20: visuelles Feedback

- 21: Steuerungskern
- 22: sensorisches Feedback
- 23: Bahnplanung
- 24: Kollisionsüberprüfung
- 25: Achsregler

- 26: Antriebsregler
- 27, 27: steuerbare Bewegung
- 28: Auswertung
- 29: sensorisch erfasste Bewegung
- 30: Bewegungskenngröße

- 31: Grenzwertüberprüfung
- 32: Sicherheitssteuerung
- 33: Grenzwertüberprüfung

- Xₒ: oberer Grenzwert
- Xᵤ: unterer Grenzwert

## Patentansprüche

1. Verfahren zum Programmieren oder Vorgeben von Bewegungen oder Abläufen eines Industrieroboters (2) oder einer sonstigen mehrachsig steuerbaren Handhabungsvorrichtung, wobei über ein von einer Bedienperson händisch zu führendes Bewegungsvorgabemittel (10) mit integrierter und/oder externer Sensorik (11; 12), welche zur Ermittlung der Orientierung und/oder Position des händisch zu führenden Bewegungsvorgabemittels (10) im Raum vorgesehen ist, von einem Steuerungssystem (1) zumindest ein Teil der Daten und Steuerbefehle für die Bewegungssteuerung oder Ablaufprogrammierung des Industrieroboters (2) generiert werden, und diese Steuerbefehle, die auf einer Vorgabe durch das händisch zu führende Bewegungsvorgabemittel (10) basieren, vom Industrieroboter (2) im wesentlichen unverzögert in korrespondierende Bewegungen oder Ablaufveränderungen umgesetzt werden, falls die von der Bedienperson vorgegebene Bewegung oder Ablaufveränderung unter Berücksichtigung von vordefinierten technischen Beschränkungen des Industrieroboters (2), wie beispielsweise einer aufbau- oder umgebungsbedingten Erreichbarkeit von Positionen oder Orientierungen, oder einer technisch erreichbaren, oder einer sicherheitstechnisch zulässigen, maximalen Geschwindigkeit von Achsen oder Stellelementen des Industrieroboters (2), technisch ausführbar ist, **dadurch gekennzeichnet, dass** aus der Bewegungsvorgabe durch das händisch zu führende Bewegungsvorgabemittel (10) und/oder aus sensorisch erfassten Messwerten der vom Industrieroboter (2) ausgeführten Bewegung oder Ablaufveränderung und/oder aus den vom Steuerungssystem (1) generierten Steuerbefehlen eine Bewegungskenngröße (30) ermittelt und mit einem oberen Grenzwert (Xₒ) verglichen wird, sodass ein Auseinanderdriften zwischen der Bewegungsvorgabe von dem im Raum frei beweglichen, händisch zu führenden Bewegungsvorgabemittel (10) und einer Umsetzung der Bewegung oder Ablaufveränderung durch den Industrieroboter (2) vom Steuerungssystem (1) erkennbar ist, und dass bei einem Überschreiten des oberen Grenzwertes (Xₒ) die Bewegung oder Ablaufveränderung des Industrieroboters (2) umgehend oder nach einer definiert begrenzten Nachlaufphase gestoppt wird, und/oder dass bei definierter Annäherung der Bewegungskenngröße (30) an den oberen Grenzwert (Xₒ) oder bei einem Überschreiten eines unteren Grenzwertes (Xᵤ), welcher niedriger als der obere Grenzwert (Xₒ) ist, der Bedienperson die Nähe oder Annäherung zum oberen Grenzwert (Xₒ) durch Abgabe eines Warnsignals (14) signalisiert wird.

2. Verfahren nach Anspruch 1, **dadurch gekennzeichnet, dass** als Bewegungskenngröße (30) eine Bahn- oder Verfahrgeschwindigkeit eines mit einem bestimmten Abschnitt des Industrieroboters (2) starr gekoppelten Elementes ermittelt und herangezogen wird.

3. Verfahren nach Anspruch 1, **dadurch gekennzeichnet, dass** als Bewegungskenngröße (30) eine Winkelgeschwindigkeit einer Achse oder eines Stellelementes des Industrieroboters (2) um eine bestimmte Achse ermittelt und herangezogen wird.

4. Verfahren nach Anspruch 1, **dadurch gekennzeichnet, dass** als Bewegungskenngröße (30) ein Maß für die momentane Abweichung zwischen der vorgabegemäß auszuführenden Bewegung und der technisch möglichen Bewegung und/oder einem sensorisch erfassten Ist-Zustand der Bewegung des Industrieroboters (2) ermittelt und herangezogen wird.

5. Verfahren nach Anspruch 1, **dadurch gekennzeichnet, dass** in Abhängigkeit von einem Ausmaß der Überschreitung des unteren und/oder oberen Grenzwertes (Xᵤ; Xₒ) eine von der Bedienperson wahrnehmbare Eigenschaft des Warnsignals (14), insbesondere dessen Intensität, Farbe oder Frequenz, verändert wird.

6. Verfahren nach Anspruch 1, **dadurch gekennzeichnet, dass** eine Überschreitung des unteren Grenzwertes (Xᵤ) akustisch, optisch oder taktil, insbesondere durch Vibration, signalisiert wird.

7. Verfahren nach Anspruch 1, **dadurch gekennzeichnet, dass** eine Überschreitung des unteren und/oder oberen Grenzwertes (Xᵤ; Xₒ) zumindest am händisch zu führenden Bewegungsvorgabemittel (10) signalisiert wird.

8. Verfahren nach Anspruch 1, **dadurch gekennzeichnet, dass** der untere und/oder der obere Grenzwert (Xᵤ; Xₒ) variabel festgelegt werden und abhängig von Betriebszuständen, Bedienungszuständen oder Umgebungsbedingungen des technischen Systems manuell geändert und/oder automatisiert angepasst werden.

9. Verfahren nach Anspruch 1, **dadurch gekennzeichnet, dass** nach einem steuerungsseitig automatisiert veranlassten Stopp der Bewegung oder Ablaufveränderung des Industrieroboters (2) aufgrund einer Stoppanweisung (13) im Steuerungssystem (1) zufolge einer Überschreitung des oberen Grenzwertes (Xₒ), eine Fortsetzung von Bewegungen oder Ablaufveränderungen erst nach Betätigung eines definierten Bedienelementes durch eine Bedienperson wieder freigegeben wird.

10. Verfahren nach Anspruch 1, **dadurch gekennzeichnet, dass** zur Einhaltung einer Geschwindigkeitsbeschränkung für eine zulässige oder technisch ausführbare Bewegung vom Steuerungssystem (1) ein geschwindigkeitsbegrenztes Nachfahren der Bewegungsvorgabe des händisch zu führenden Bewegungsvorgabemittels (10) veranlasst wird.

11. Verfahren nach Anspruch 1, **dadurch gekennzeichnet, dass** zur Einhaltung einer Geschwindigkeitsbeschränkung für eine zulässige oder technisch ausführbare Bewegung vom Steuerungssystem (1) ein geschwindigkeitsbegrenztes Ansteuern der zeitlich jüngsten Position und/oder Orientierung in Bezug auf die Bewegungsvorgabe des händisch zu führenden Bewegungsvorgabemittels (10) veranlasst wird.

12. Verfahren nach Anspruch 1, **dadurch gekennzeichnet, dass** zur Einhaltung einer Geschwindigkeitsbeschränkung für eine zulässige oder technisch ausführbare Bewegung vom Steuerungssystem (1) eine geschwindigkeitsbegrenzte Bewegung in die zum jeweiligen Zeitpunkt vorliegende Richtung der Bewegungsvorgabe des händisch zu führenden Bewegungsvorgabemittels (10) veranlasst wird.

13. Verfahren nach Anspruch 1, **dadurch gekennzeichnet, dass** zur Einhaltung einer Positions- oder Koordinatenbeschränkung für eine zulässige oder technisch ausführbare Bewegung vom Steuerungssystem (1) ein Anfahren eines in Bezug auf die Bewegungsvorgabe durch das händisch zu führende Bewegungsvorgabemittel (10) geometrisch nächstliegenden, zulässigen Punktes veranlasst wird.

14. Verfahren nach Anspruch 1, **dadurch gekennzeichnet, dass** zufolge einer translatorischen Positionsveränderung des händisch zu führenden Bewegungsvorgabemittels (10) eine Drehung eines Abschnittes oder eines Armes des Industrieroboters (2) um eine bestimmte Raumachse bewirkt wird.

15. Verfahren nach Anspruch 1, **dadurch gekennzeichnet, dass** zufolge einer Rotation des händisch zu führenden Bewegungsvorgabemittels (10) um eine Gehäuseachse des Bewegungsvorgabemittels (10) eine translatorische Bewegung eines Elementes des Industrieroboters (2) entlang einer definierten, auswählbaren Raumachse bewirkt wird.

16. Verfahren nach Anspruch 11, **dadurch gekennzeichnet, dass** die Raumachse für die Bewegung des Industrieroboters (2) durch die Lage der Gehäuseachse des händisch zu führenden Bewegungsvorgabemittels (10) im Raum festgelegt wird.

## Claims

1. Method for programming or setting movements or sequences of an industrial robot (2) or another handling device having multiaxis controllability, where at least some of the data and control commands for controlling the movement, or programming the sequence of the industrial robot (2) are generated via a movement setting means (10) to be operated manually by an operator which movement setting means (10) has an integrated and/or external sensor sys-tem (11; 12) which is provided for determining the orientation and/or position in the space of the movement setting means (10) to be operated manually, and at least some of the data and control commands for controlling the movement, or programming the sequence of the industrial robot (2) are generated via a control system (1), and said control commands which base upon a setting by the movement setting means (10) to be operated manually are implemented by the industrial robot (2) substantially without delay into corresponding movements or sequence changes, if the movement of sequence change set by the operator is technically implementable by taking into consideration the predefined technical limitations of the industrial robot (2), such as a design-related or environment-related accessibility of positions or orientations, or a maximum speed of axes or adjusting elements of the industrial robot (2) which speed is technically achievable or allowed in terms of safety, **characterized in that** on the basis of the movement setting by means of the movement setting means (10) to be operated manually and/or on the basis of the measured values, acquired by sensors, of the movement or sequence change carried out by the industrial robot (2) and/or on the basis of the control commands generated by the control system (1), a characteristic movement variable (30) is determined and compared to an upper limiting value (Xo), so that a growing gap between the movement setting by the movement setting means (10), which is freely movable in space and to be operated manually, and the implementation of the movement or sequence change by the industrial robot (2) may be recognized by the control system (1), and that, if the upper limiting value (Xo) is exceeded, the movement or sequence change of the industrial robot (2) is stopped immediately or after an overrun phase limited in a defined manner, and/or that, if the characteristic movement variable (30) approaches the upper limiting value (Xo) in a defined manner, or if a lower limiting value (Xu), which is lower than the upper limiting value (Xo), is exceeded, the closeness to or approach of the upper limiting value (Xo), is signaled to the operator by outputting a warning signal (14).

2. Method according to claim 1, **characterized in that** a track speed or a travelling speed of an element coupled to a defined section of the industrial robot (2) in a fixed manner is determined and consulted as characteristic movement vari-able (30).

3. Method according to claim 1, **characterized in that** an angular speed of an axis or of an adjusting element of the industrial robot (2) about a defined axis is determined and consulted as characteristic movement variable (30).

4. Method according to claim 1, **characterized in that** a degree for the current de-viation between the movement to be carried out according to the setting and the technically implementable movement and/or an actual state of the move-ment, acquired by sensors, of the industrial robot (2) is determined and con-sulted as characteristic movement variable (30).

5. Method according to claim 1, **characterized in that** a characteristic of the warn-ing signal (14), in particular its intensity, color or frequency, that can be noticed by the operator is changed depending on an extent to which the lower and/or upper limiting value (Xu; Xo) is exceeded.

6. Method according to claim 1, **characterized in that** an exceeding of the lower limiting value (Xu) is signaled in an acoustical, optical or tactile, in particular by vibration, way.

7. Method according to claim 1, **characterized in that** an exceeding of the lower and/or upper limiting value (Xu; Xo) is signaled at least at the movement setting means (10) to be operated manually.

8. Method according to claim 1, **characterized in that** the lower and/or the upper limiting value (Xu; Xo) are defined to be variable and may be adjusted in a manual and/or automated way depending on operating conditions, working conditions or environmental conditions of the technical system.

9. Method according to claim 1, **characterized in that** after the movement or the sequence change of the industrial robot (2) has been stopped initiated by the control in an automated way due to a stop instruction (13) in the control sys-tem (1) as a consequence of an exceeding of the upper limiting value (Xo), the movements or the sequence changes may only be continued after a defined operating element has been operated by the operator.

10. Method according to claim 1, **characterized in that** for observing a speed limit for an allowed or technically implementable movement, the control system (1) initiates an overrun with speed limitation of the movement setting of the movement setting means (10) to be operated manually.

11. Method according to claim 1, **characterized in that** for observing a speed limit for an allowed or technically implementable movement, the control system (1) initiates an actuation with speed limitation of the recent position and/or orientation in relation to the movement setting of the movement setting means (10) to be operated manually.

12. Method according to claim 1, **characterized in that** for observing a speed limit for an allowed or technically implementable movement, the control system (1) initiates a movement with speed limitation in the direction of the movement setting, which direction is present at the respective point of time, of the move-ment setting means (10) to be operated manually.

13. Method according to claim 1, **characterized in that** for observing a limitation of position or coordinates for an allowed or technically implementable movement, the control system (1) initiates an approach to a permitted point which is geometrically closest with respect to the movement setting by the movement setting means (10) to be operated manually.

14. Method according to claim 1, **characterized in that** as a consequence of the translational change of position of the movement setting means (10) to be op-erated manually it is caused for a section or an arm of the industrial robot (2) to be rotated about a defined space axis.

15. Method according to claim 1, **characterized in that** as a consequence of a rotation of the movement setting means (10) to be operated manually about a housing axis of the movement setting means (10), a translational movement of an element of the industrial robot (2) along a defined, selectable space axis is caused.

16. Method according to claim 11, **characterized in that** the space axis for the movement of the industrial robot (2) is defined by the position in space of the housing axis of the movement setting means (10) to be operated manually.

## Revendications

1. Procédé pour programmer ou prédéfinir des déplacements ou des séquences d'un robot industriel (2) ou d'un autre dispositif de manutention à plusieurs axes pouvant être commandé, dans lequel à l'aide d'un moyen de prédéfinition de déplacements (10) qu'un opérateur doit porter à la main, comprenant une technique sensorielle intégrée et/ou externe (11 ; 12) qui est prévue pour déterminer l'orientation et/ou la position du moyen de prédéfinition de déplacements portable à la main (10) dans l'espace, au moins une partie des données et des ordres de commande pour la commande des déplacements ou la programmation des séquences du robot industriel (2) sont générés par un système de commande (1) et ces ordres de commande, qui sont basés sur une prédéfinition par le biais du moyen de prédéfinition de déplacements portable à la main (10), sont appliqués essentiellement sans retard par le robot industriel (2) dans des déplacements ou des changements de séquences correspondants si le déplacement ou le changement de séquence prédéfini par l'opérateur peut être exécuté techniquement, en tenant compte de limites techniques prédéfinies du robot industriel (2), comme par exemple une accessibilité de positions ou d'orientations en fonction de la construction ou de l'environnement ou une vitesse maximale d'axes ou d'éléments de réglage du robot industriel (2) pouvant être atteinte techniquement ou permis pour des raisons de sécurité, **caractérisé en ce qu'**à partir de la prédéfinition de déplacements par le biais du moyen de prédéfinition de déplacements portable à la main (10) et/ou à partir de valeurs de mesure, déterminées au moyen de la technique sensorielle, du déplacement ou du changement de séquence exécuté par le robot industriel (2) et/ou à partir des ordres de commande générés par le système de commande (1), une valeur caractéristique du déplacement (30) est calculée et comparée à une valeur limite supérieure (Xo) de telle sorte qu'une dérive entre le déplacement prédéfini par le moyen de prédéfinition de déplacements portable à la main (10), pouvant être déplacé librement dans l'espace, et une application du déplacement ou du changement de séquence par le robot industriel (2) peut être identifiée par le système de commande (1), et **en ce qu'**en cas de dépassement de la valeur limite supérieure (oxo), le déplacement ou le changement de séquence du robot industriel (2) est arrêté immédiatement ou après une phase d'inertie limitée de façon définie, et/ou **en ce que** si la valeur caractéristique du déplacement (30) s'approche de façon définie de la valeur limite supérieure (Xo) ou descend en dessous d'une valeur limite inférieure (Xu) qui est inférieure à la valeur limite supérieure (Xo), la proximité ou le rapprochement de la valeur limite supérieure (Xo) est signalé à l'opérateur par l'émission d'un signal d'avertissement (14).

2. Procédé selon la revendication 1, **caractérisé en ce que** comme valeur caractéristique du déplacement (30), une vitesse de trajet ou de déplacement d'un élément couplé de façon fixe à une section déterminée du robot industriel (2) est calculée et utilisée.

3. Procédé selon la revendication 1, **caractérisé en ce que** comme valeur caractéristique du déplacement (30), une vitesse d'angle d'un axe ou d'un élément de réglage du robot industriel (2) autour d'un axe déterminé est calculée et utilisée.

4. Procédé selon la revendication 1, **caractérisé en ce que** comme valeur caractéristique du déplacement (30), une mesure de la déviation actuelle entre le déplacement devant être exécuté selon la prédéfinition et le déplacement possible techniquement et/ou un état effectif déterminé au moyen de la technique sensorielle du déplacement du robot industriel (2) est calculée et utilisée.

5. Procédé selon la revendication 1, **caractérisé en ce qu'**en fonction d'une ampleur du dépassement de la valeur limite inférieure et/ou supérieure (Xu ; Xo), une caractéristique du signal d'avertissement (14) pouvant être perçue par l'opérateur, en particulier son intensité, sa couleur ou sa fréquence, est modifiée.

6. Procédé selon la revendication 1, **caractérisé en ce qu'**un dépassement de la valeur limite inférieure (Xu) est signalé de façon acoustique, visuelle ou tactile, en particulier par une vibration.

7. Procédé selon la revendication 1, **caractérisé en ce qu'**un dépassement de la valeur limite inférieure et/ou supérieure (Xu ; Xo) est signalé au moins au niveau du moyen de prédéfinition de déplacements portable à la main (10).

8. Procédé selon la revendication 1, **caractérisé en ce que** la valeur limite inférieure et/ou supérieure (Xu ; Xo) est établie de façon variable et modifiée manuellement et/ou adaptée automatiquement en fonction d'états de fonctionnement, d'états de service ou de conditions de l'environnement du système technique.

9. Procédé selon la revendication 1, **caractérisé en ce qu'**après un arrêt provoqué automatiquement par la commande du déplacement ou du changement de séquence du robot industriel (2) en raison d'une instruction d'arrêt (13) dans le système de commande (1) à la suite d'un dépassement de la valeur limite supérieure (Xo), une poursuite de déplacements ou de changements de séquence n'est à nouveau autorisée qu'après l'actionnement d'un élément de service défini par un opérateur.

10. Procédé selon la revendication 1, **caractérisé en ce que** pour respecter une limite de vitesse pour un déplacement permis ou exécutable techniquement, un rattrapage limité dans la vitesse de la prédéfinition de déplacement du moyen de prédéfinition de déplacements portable à la main (10) est induit par le système de commande (1).

11. Procédé selon la revendication 1, **caractérisé en ce que** pour respecter une limite de vitesse pour un déplacement permis ou exécutable techniquement, un pilotage limité dans la vitesse de la position et/ou de l'orientation la plus récente par rapport à la prédéfinition de déplacement du moyen de prédéfinition de déplacements portable à la main (10) est induit par le système de commande (1).

12. Procédé selon la revendication 1, **caractérisé en ce que** pour respecter une limite de vitesse pour un déplacement permis ou exécutable techniquement, un déplacement limité dans la vitesse dans la direction existante au moment concerné de la prédéfinition de déplacement du moyen de prédéfinition de déplacements portable à la main (10) est induit par le système de commande (1).

13. Procédé selon la revendication 1, **caractérisé en ce que** pour respecter une limite de position ou de coordonnées pour un déplacement permis ou exécutable techniquement, un démarrage d'un point permis le plus proche géométriquement par rapport à la prédéfinition de déplacement du moyen de prédéfinition de déplacements portable à la main (10) est induit par le système de commande (1).

14. Procédé selon la revendication 1, **caractérisé en ce qu'**à la suite d'un changement de position par translation du moyen de prédéfinition de déplacements portable à la main (10), une rotation d'une section ou d'un bras du robot industriel (2) autour d'un axe spatial déterminé est réalisée.

15. Procédé selon la revendication 1, **caractérisé en ce qu'**à la suite d'une rotation du moyen de prédéfinition de déplacements portable à la main (10) autour d'un axe du boîtier du moyen de prédéfinition de déplacements (10), un déplacement par translation d'un élément du robot industriel (2) le long d'un axe spatial défini pouvant être sélectionné est réalisé.

16. Procédé selon la revendication 11, **caractérisé en ce que** l'axe spatial pour le déplacement du robot industriel (2) est établi par la position de l'axe du boîtier du moyen de prédéfinition de déplacements portable à la main (10) dans l'espace.
